# EUROPEAN PATENT APPLICATION

(11) **EP 2 530 947 A2**
(43) Date of publication of application: **05.12.2012**
(21) Application number: 12170582.6
(22) Date of filing: 01.06.2012
(51) Int. Cl.: H04N 21/422

(54) **Apparatus and method for performing web browsing using remote controller**

(30) Priority: 03.06.2011 KR 20110053859
(71) Applicant: Samsung Electronics Co., Ltd., Suwon-si, Gyeonggi-do, 443-742 (KR)
(72) Inventor: Seo, Suck-Ho, Gyeonggi-do (KR); Kim, Jae-Hwan, Gyeonggi-do (KR)
(74) Representative: Jenkins, Richard Gavin

(57) **Abstract**

A method for web browsing in a remote controller including a touch screen includes sending a browser execution command at a device capable of web browsing; receiving a HyperText Markup Language (HTML) file corresponding to a webpage to be displayed in the device, from the device capable of web browsing; and displaying a webpage corresponding to the HTML file using a browser. A method for web browsing in a device capable of web browsing includes receiving a browser execution command from a remote controller including a touch screen, requesting a corresponding webpage from a corresponding server, receiving an HTML file of the corresponding webpage from the corresponding server through the browser, and sending the HTML file of the corresponding webpage to the remote controller including the touch screen. Hence, the user can browse on the web more easily.

## Description

### BACKGROUND OF THE INVENTION

### 1. Field of the Invention

The present invention relates generally to web browsing and more particularly, the present invention relates to an apparatus and a method for synchronizing web browsing using a remote controller including a touch screen.

### 2. Description of the Related Art

Digital Televisions today provide Internet functionality and bi-directional communication. Various control commands can be remotely input to home appliances such as TVs through a remote control to facilitate their use. As TV capabilities advance as smart devices, a function for remotely controlling the smart TV through a mobile phone or a smart phone is under development. Hereinafter, a module for the remote control function using the remote control and the smart phone is referred to as a remote controller.

However, when the Internet is used in an Internet TV or a TV connected to a set-top box for Internet Protocol TV (IPTV), four direction keys of the remote controller which is the TV input device are used for browsing. Since it is necessary to manipulate the direction keys to scroll on a screen or to select content, a user is inconvenienced as compared to using a mouse.

That is, when interactions depend on the remote controller to use the Internet through the TV, it is difficult to navigate an Internet page with the four direction keys and browsing gets cumbersome.

As stated above, when browsing is performed in the TV using the four direction keys of a conventional remote control, user interactions are very difficult or different a User Interface (UI) needs to be used for browsing on a TV. Hence, browsing is not convenient, as compared to conventional computers or mobile terminals.

Thus, to access the Internet through the TV remotely controlled by the remote controller, an apparatus and a method for allowing the user to browse on the web more easily is needed.

### SUMMARY OF THE INVENTION

Accordingly, the present invention has been made to solve at least the above-described problems and/or disadvantages and to provide at least the advantages described below. Accordingly, an aspect of the present invention is to provide an apparatus and a method for web browsing using a remote controller.

Another aspect of the present invention is to provide a method and an apparatus for providing web browsing synchronization between a remote controller including a touch screen and a device remotely controlled by the remote controller.

Yet another aspect of the present invention is to provide a method and an apparatus for providing a user interface for browsing to a device remotely controlled by a remote controller including a touch screen.

According to an aspect of the present invention, a method for web browsing in a remote controller including a touch screen includes sending a browser execution command to a device capable of web browsing, receiving a HyperText Markup Language (HTML) file corresponding to a webpage to be displayed in the device, from the device capable of web browsing, and displaying a webpage corresponding to the HTML file using a browser.

According to another aspect of the present invention, a method for web browsing in a device capable of web browsing includes receiving a browser execution command from a remote controller including a touch screen, requesting a corresponding webpage from a corresponding server, receiving an HTML file of the corresponding webpage from the corresponding server through the browser, and sending the HTML file of the corresponding webpage to the remote controller including the touch screen.

According to yet another aspect of the present invention, a method for web browsing in a remote controller including a touch screen includes sending a browser execution command to a device incapable of web browsing, requesting a corresponding webpage from a corresponding server, receiving an HTML file of the corresponding webpage from the corresponding server, and sending the HTML file of the corresponding webpage to the device incapable of web browsing.

According to still another aspect of the present invention, a method for web browsing in a device incapable of web browsing includes receiving a browser execution command from a remote controller including a touch screen, receiving an HTML file of a corresponding webpage from the remote controller, and displaying a webpage corresponding to the HTML file using a browser.

According to a further aspect of the present invention, a method for web browsing in a remote controller including a touch screen includes sending a browser execution command to a device capable of web browsing, transmitting a Uniform Resource Locator (URL) of a corresponding webpage to display, to the device capable of web browsing, requesting the corresponding webpage from a corresponding server, receiving an HTML file of the corresponding webpage from the corresponding server, and displaying the webpage corresponding to the HTML file using a browser.

According to a further aspect of the present invention, a method for web browsing in a device capable of web browsing includes receiving a browser execution command from a remote controller including a touch screen, receiving a URL of a corresponding webpage from the remote controller, requesting the corresponding webpage from a corresponding server based on the received URL and receiving an HTML file of the corresponding webpage from the corresponding server, and displaying the webpage corresponding to the HTML file using a browser.

### BRIEF DESCRIPTION OF THE DRAWINGS

The above and other aspects, features, and advantages of the present invention will be more apparent from the following description taken in conjunction with the accompanying drawings, in which:
FIG. 1 is a diagram illustrating a system according to an embodiment of the present invention;
FIG. 2 is a flowchart illustrating a method for Internet browsing through a remote controller according to an embodiment of the present invention;
FIG. 3 is a flowchart illustrating a method for the Internet browsing through the remote controller according to an embodiment of the present invention; and
FIG. 4 is a flowchart illustrating a method for the Internet browsing through the remote controller according to an embodiment of the present invention.

### DETAILED DESCRIPTION OF EMBODIMENTS OF THE PRESENT

### INVENTION

Various embodiments of the present invention are described in detail with reference to the accompanying drawings. The same or similar components may be designated by the same or similar reference numerals throughout the drawings. Detailed description of constructions or processes known in the art may are omitted to avoid obscuring the subject matter of the present invention. Terms described below, which are defined in considering the functionalityof the present invention, can be different depending on user and operator intention or practice.

Embodiments of the present invention provide an apparatus and a method for browsing on a multi-screen using a remote controller. Herein, the remote controller is a remote control for remotely controlling a TV or a computer, or a module (e.g., an application for the remote control function) of a smart phone for remotely controlling a TV or a computer in a smart phone.

Hereinafter, browsing is performed in, but not limited to, a digital TV using a remote control including a touch screen. In other words, the present invention may be applied to any device for the Internet function remotely controlled by the remote controller.

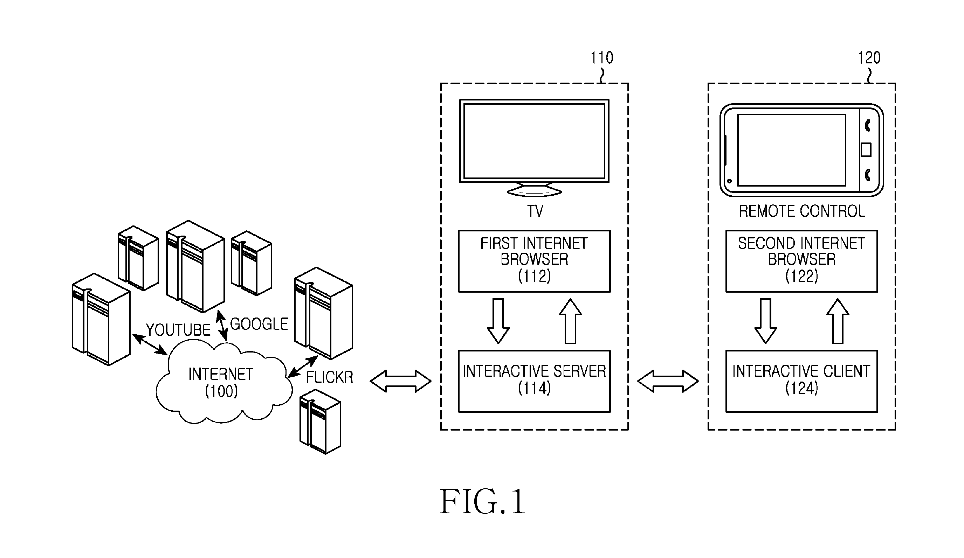

FIG. 1 illustrates a system according to an embodiment of the present invention.

Referring to FIG. 1, the system includes a digital TV (or a smart TV) 110 providing Internet browsing, a remote control 120 including a touch screen, and an Internet 100 for connecting the digital TV 110 to the backbone network. Although it is not illustrated in FIG. 1, the Internet 100 includes a plurality of routers, and a plurality of servers are connected to the corresponding routers.

Besides a capability for receiving digital broadcasting, the digital TV 110 provides an Internet browsing function. In addition, the digital TV 110 includes a first Internet browser module 112 and an interactive server module 114. When a user browses the Internet, the digital TV 110 provides an interactive interface so that the user can more easily surf and search for information on the web.

The first Internet browser module 112 is an application program for helping hypertext document search on the Internet, and allows browsing information of a web server. In addition, the first Internet browser module 112 opens the webpage, provides a list of Uniform Resource Locators (URLs) recently visited, stores and manages the URLs frequently visited, and stores and prints the webpage. The first Internet browser module 112 is synchronized with a second Internet browser module 122 through information exchange between the interactive server module 114 and an interactive client module 124, and accordingly a screen displayed in the first Internet browser module 112 is the same as a screen displayed in the second Internet browser module 122.

The remote control 120 including the touch screen remotely controls by sending a control command code, such as channel change, to the TV, and controls the Internet browsing using a direction key or a selection key. In addition, the remote control 120 includes the second Internet browser module 122 and the interactive client module 124. When the user browses the Internet, the remote control 120 provides the interactive interface so that the user can more easily surf and search on the web.

The second Internet browser module 122 is an application program for helping the hypertext document search on the Internet, and allows browsing the information of the web server. In addition, the second Internet browser module 122 opens the webpage, provides the list of the URLs recently visited, store and manages the URLs frequently visited, and stores and prints the webpage. The second Internet browser module 122 is synchronized with the first Internet browser module 112 through the information exchange between the interactive server module 114 and the interactive client module 124, and accordingly the screen displayed in the first Internet browser module 112 is the same as the screen displayed in the second Internet browser module 122.

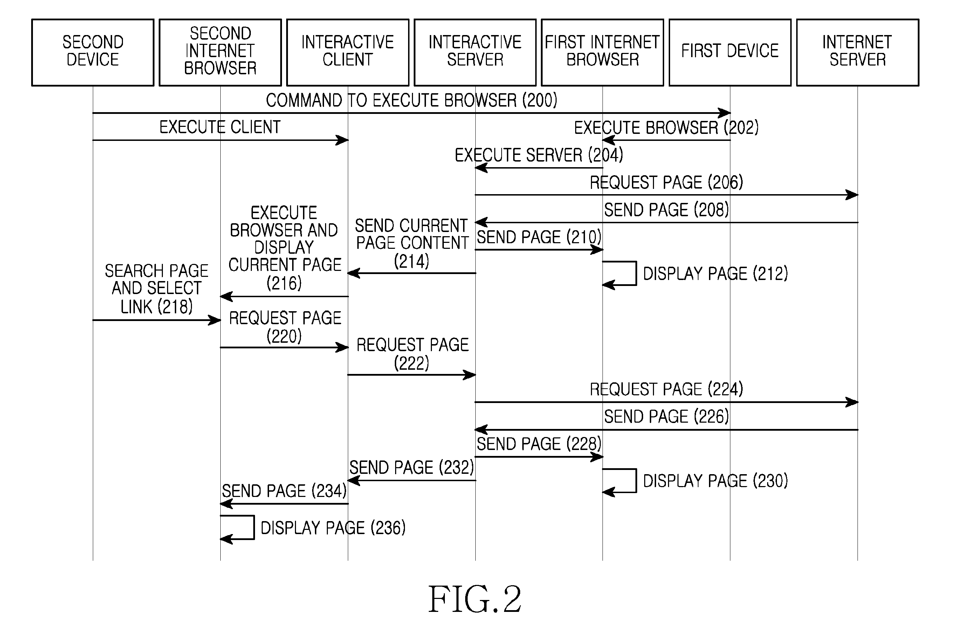

FIG. 2 is a flowchart illustrating a method for Internet browsing through the remote controller according to an embodiment of the present invention.

A second device is the remote controller (i.e., the remote control) for controlling a first device, and the first device is the digital TV controlled by the remote controller. The second device includes a touch screen, and displays status screen or a TV browser page when the TV is controlled on the touch screen. Herein, the second device does not include an interface directly accessing the Internet, and the first device includes an interface directly accessing the Internet. The first device and the second device can be interconnected through Wireless Local Area Network (WLAN), Bluetooth®, or InfraRed (IR) communication.

Referring now to FIG. 2, the second device sends an Internet browser execution command to the first device in step 200. The first device instructs a first Internet browser to execute the browser in step 202, and the first Internet browser instructs an interactive server to execute the server in step 204.

The interactive server requests the corresponding webpage from an Internet server in step 206, and receives the corresponding webpage from the Internet server based on HyperText Markup Language (HTML) in step 208.

The interactive server provides the webpage based on the HTML received from the Internet server to the first Internet browser in step 210, and provides current page content (i.e., the webpage written in HTML) to be displayed in the first Internet browser, to an interactive client in step 214.

In step 212, the first Internet browser displays the HTML based webpage provided from the interactive server, on the screen of the first device.

In step 216, the interactive client sends webpage content provided from the interactive server and to be displayed on the screen of the first device, to the second Internet browser, and the second Internet browser displays the webpage to be displayed on the screen of the first device.

Herein, the first device and the second device are synchronized through the interactive server and the interactive client, and the webpage displayed on the screen of the first device is the same as the webpage displayed on the screen of the second device.

When an event such as page search and link selection takes place through the user touch screen input in the webpage displayed on the screen of the second device, the second device sends an event-triggering signal to the second Internet browser in step 218. The event-triggering signal can be an event for selecting a link address or a search address by the user, an event for adjusting a web screen size, or an event for search for data through the scroll.

The second Internet browser sends page information corresponding to the event-triggering signal to the interactive client in step 220, and the interactive client forwards the corresponding page information to the interactive server in step 222. Herein, the corresponding page information can be the web address searched by the user or the link address in the displayed webpage.

The interactive server requests the page corresponding to the link address or the search address received from the interactive client, to the Internet server in step 224, and receives the page corresponding to the link address or the search address received from the interactive client, from the Internet server in step 226.

The interactive server forwards the HTML webpage received from the Internet server to the first Internet browser in step 228, and provides the interactive client with the current page content (i.e., the webpage written in HTML) to be displayed in the first Internet browser in step 232.

In step 230, the first Internet browser displays the HTML update webpage received from the interactive server on the screen of the first device.

In step 234, the interactive client forwards the update webpage content received from the interactive server and to be displayed on the screen of the first device, to the second Internet browser. In step 236, the second Internet browser displays the update webpage to be displayed on the screen of the first device.

As described above, the digital TV and the remote control can simultaneously display the current web browser screen so that the user can easily browse on the TV using the remote control.

In one embodiment of the present invention, the second device does not have the interface directly accessing the Internet, and the first device has the interface directly accessing the Internet.

Alternatively, the first device may not have the interface directly accessing the Internet and the second device may have the interface directly accessing the Internet (in another embodiment), or both of the first device and the second device may have the interface directly accessing the Internet (in yet another embodiment).

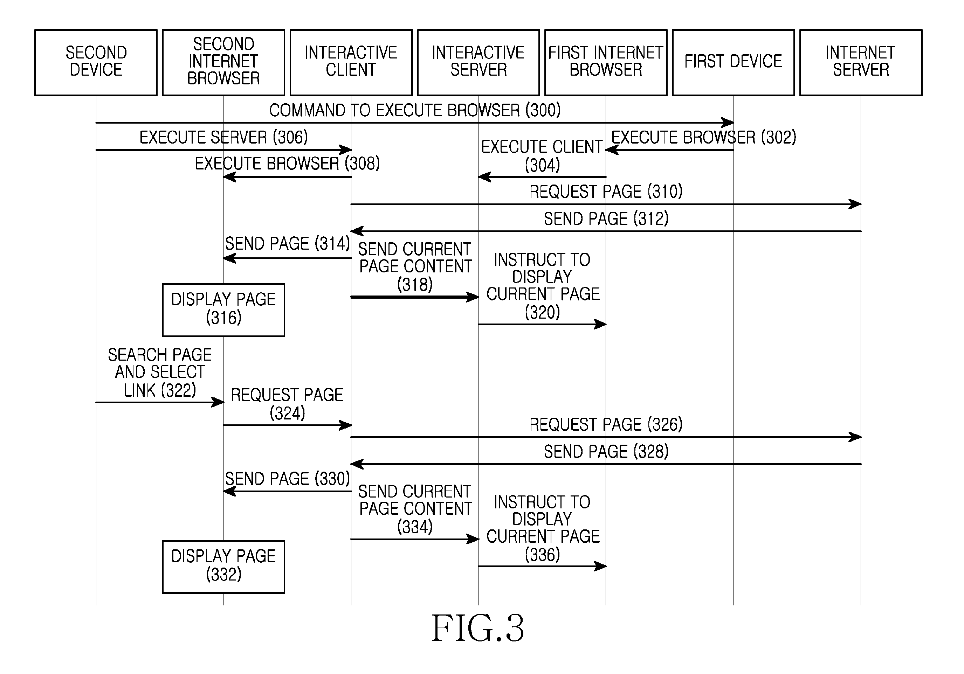

FIG. 3 is a flowchart of a method for the Internet browsing through the remote controller according to another embodiment of the present invention.

A second device is the remote controller (i.e., the remote control) for controlling a first device, and the first device is the digital TV controlled by the remote controller. The second device includes a touch screen, and displays status screen or a TV browser page when the TV is controlled on the touch screen. Herein, the first device does not include the interface directly accessing the Internet, and the second device includes the interface directly accessing the Internet. The first device and the second device can be interconnected through WLAN, Bluetooth®, or InfraRed (IR) communication.

Referring to FIG. 3, the second device sends an Internet browser execution command to the first device in step 300. The first device instructs a first Internet browser to execute the browser in step 302, and the first Internet browser instructs an interactive client to execute the client in step 304.

Since the first device cannot directly access the Internet, the second device capable of browsing the Internet instructs the interactive server to execute the server in step 306 and the interactive server instructs to execute the browser in step 308. In various implementations, the second device may instruct to execute the browser and to execute the server at the same time.

The interactive server requests the corresponding webpage from an Internet server in step 310, and receives the corresponding webpage based on the HTML from the Internet server in step 312.

The interactive server provides the webpage based on the HTML received from the Internet server to the second Internet browser in step 314, and provides current page content (i.e., the webpage written in HTML) to be displayed in the second Internet browser, to the interactive client in step 318.

In step 316, the second Internet browser displays the HTML based webpage provided from the interactive server, on the screen of the second device.

In step 320, the interactive client sends the webpage content provided from the interactive server and to be displayed on the screen of the second device, to the first Internet browser, and the first Internet browser displays the webpage to be displayed on the screen of the second device.

Herein, the first device and the second device are synchronized through the interactive server and the interactive client, and the webpage displayed on the screen of the first device is the same as the webpage displayed on the screen of the second device.

When an event such as a page search and link selection takes place through the user touch screen input in the webpage displayed on the screen of the second device, the second device sends an event-triggering signal to the second Internet browser in step 322. The second Internet browser transmits page information corresponding to the event-triggering signal to the interactive server in step 324. Herein, the corresponding page information can be the web address searched by the user or the link address in the displayed webpage.

The interactive server requests the page corresponding to the link address or the search address from the Internet server in step 326, and receives the page corresponding to the link address or the search address from the Internet server in step 328.

The interactive server forwards the HTML webpage to the second Internet browser in step 330, and provides the interactive client with the current page content (i.e., the webpage written in the HTML) to be displayed in the second Internet browser in step 334.

In step 332, the second Internet browser displays the HTML update webpage received from the interactive server on the screen of the second device.

In step 336, the interactive client forwards the update webpage content received from the interactive server and to be displayed on the screen of the second device, to the first Internet browser, and the first Internet browser displays the update webpage to be displayed on the screen of the second device.

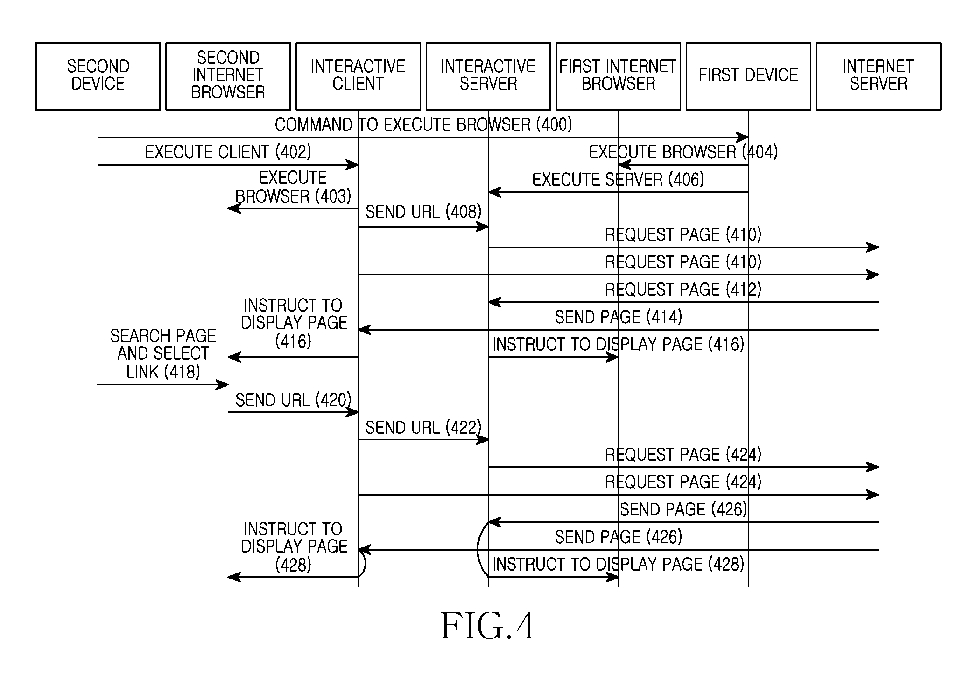

FIG. 4 is a flowchart of a method for the Internet browsing through the remote controller according to yet another embodiment of the present invention.

A second device is the remote controller (i.e., the remote control) for controlling a first device, and the first device is the digital TV controlled by the remote controller. The second device includes a touch screen, and displays status screen or a TV browser page when the TV is controlled on the touch screen. Herein, both of the first device and the second device include the interface directly accessing the Internet. The first device and the second device can be interconnected through WLAN, Bluetooth®, or IR communication.

Referring to FIG. 4, the second device sends an Internet browser execution instruction command to the first device in step 400 and instructs an interactive client to execute the client in step 402. The interactive client instructs a second Internet browser to execute the browser in step 403.

Upon receiving the browser execution instruction from the second device, the first device instructs the first Internet browser to execute the browser in step 404. The first Internet browser instructs the interactive server to execute the server in step 406.

In step 408, the interactive client transmits URL information of the webpage to be displayed by the user to the interactive server.

The interactive client and the interactive server request the webpage from the Internet server based on the URL in step 410, the interactive server receives the URL based webpage from the Internet server in step 412, and the interactive client also receives the URL based webpage from the Internet server in step 414.

In step 416, the interactive client and the interactive server send an instruction to the second Internet browser and the first Internet browser to display the received webpage on the screen.

The first device and the second device are synchronized through the interactive server and the interactive client, and the webpage displayed on the screen of the first device is the same as the webpage displayed on the screen of the second device.

When an event such as page search and link selection takes place through the user touch screen input in the webpage displayed on the screen of the second device, the second device sends an event-triggering signal to the second Internet browser in step 418. The second Internet browser transmits page information corresponding to the event-triggering signal to the interactive client in step 420. The interactive client transmits the corresponding URL information to the interactive server in step 422.

In step 424, the interactive client and the interactive server request the update webpage from the Internet server based on the URL. The interactive server receives the URL based update webpage from the Internet server in step 426, and the interactive client also receives the URL based update webpage from the Internet server in step 426.

In step 428, the interactive client and the interactive server send an instruction to the second Internet browser and the first Internet browser to display the received webpage on the screen.

Herein, the first device and the second device are synchronized through the interactive server and the interactive client, and the webpage displayed on the screen of the first device is the same as the update webpage displayed on the screen of the second device.

In one and another embodiments, when either the digital TV or the remote controller allows the Internet browsing, the device capable of browsing on the Internet receives the webpage over the Internet and provides the webpage, which is written in the HTML, to be currently displayed to the device incapable of browsing on the Internet. Thus, the same webpage is displayed on the screens of the digital TV and the remote controller.

When both of the digital TV and the remote controller allow the Internet browsing and the remote controller provides the URL information to display on the screen to the digital TV, the digital TV and the remote controller each receive the webpage corresponding to the URL over the Internet and display the received webpage on the screen.

As set forth above, the remote controller including the touch screen and the device including another touch screen and remotely controlled provide the same web view in the two touch screens at the same time. Therefore, the user can more easily browse on the web.

Although the present invention has been shown and described with reference to certain various embodiments thereof, it will be understood by those skilled in the art that changes in form and detail may be made without departing from the spirit and scope of the invention as defined by the appended.

## Claims

1. A method for web browsing in a remote controller including a touch screen, the method comprising:
sending a browser execution command to a device capable of web browsing;
receiving a HyperText Markup Language (HTML) file corresponding to a webpage to be displayed in the device, from the device capable of web browsing; and
displaying a webpage corresponding to the HTML file using a browser,
wherein the remote controller including the touch screen and the device capable of web browsing are synchronized to display the same webpage.

2. The method of claim 1, further comprising:
when a link is selected or a search address is input in the webpage through the touch screen of the remote controller, requesting a page corresponding to an update page corresponding to the input search address from the device capable of web browsing;
receiving an HTML file corresponding to the requested update page from the device capable of web browsing; and
displaying the update webpage corresponding to the received HTML file using the browser.

3. The method of claim 1, further comprising:
when a webpage screen adjustment event takes place through the touch screen of the remote controller, sending the webpage screen adjustment event to the device capable of web browsing.

4. A method for web browsing in a device capable of web browsing, the method comprising:
receiving a browser execution command from a remote controller including a touch screen;
requesting a corresponding webpage from a corresponding server;
receiving a HyperText Markup Language (HTML) file of the corresponding webpage from the corresponding server through the browser; and
sending the HTML file of the corresponding webpage to the remote controller including the touch screen.

5. The method of claim 4, further comprising:
displaying the webpage corresponding to the HTML file using the browser,
wherein the remote controller including the touch screen and the device capable of web browsing are synchronized to display the same webpage.

6. The method of claim 4, further comprising:
when a link is selected or a search address is input in the webpage through the touch screen of the remote controller, receiving a request for a page corresponding to the selected link or an update page corresponding to the input search address from the remote controller;
requesting the requested update webpage from the corresponding server;
receiving an HTML file of the requested update webpage from the corresponding server; and
sending the HTML file of the requested update webpage to the remote controller.

7. The method of claim 4, further comprising:
when a webpage screen adjustment event takes place through the touch screen of the remote controller, receiving the webpage screen adjustment event from the remote controller; and
processing the webpage screen adjustment event.

8. A method for web browsing in a remote controller including a touch screen, the method comprising:
sending a browser execution command to a device incapable of web browsing;
requesting a corresponding webpage from a corresponding server;
receiving a HyperText Markup Language (HTML) file of the corresponding webpage from the corresponding server; and
sending the HTML file of the corresponding webpage to the device incapable of web browsing.

9. The method of claim 8, further comprising:
displaying the webpage corresponding to the HTML file using a browser,
wherein the remote controller including the touch screen and the device incapable of web browsing are synchronized to display the same webpage.

10. The method of claim 8, further comprising:
when a link is selected or a search address is input in the webpage through the touch screen of the remote controller, requesting a page corresponding to the selected link or an update webpage corresponding to the input search address from the corresponding server, and receiving an HTML file of the update webpage from the corresponding server; and
sending the HTML file of the update webpage to the device incapable of web browsing.

11. The method of claim 8, further comprising:
when a webpage screen adjustment event takes place through the touch screen of the remote controller, sending the webpage screen adjustment event to the device incapable of web browsing.

12. A method for web browsing in a device incapable of web browsing, the method comprising:
receiving a browser execution command from a remote controller including a touch screen;
receiving a HyperText Markup Language (HTML) file of a corresponding webpage from the remote controller; and
displaying a webpage corresponding to the HTML file using a browser.

13. The method of claim 12, wherein the remote controller including the touch screen and the device incapable of web browsing are synchronized to display the same webpage.

14. The method of claim 12, further comprising:
when a link is selected or a search address is input in the webpage through the touch screen of the remote controller, receiving an HTML file of a page corresponding to the selected link or an update webpage corresponding to the input search address, from the remote controller; and
displaying the update webpage corresponding to the HTML file using a browser.

15. The method of claim 12, further comprising:
when a webpage screen adjustment event takes place through the touch screen of the remote controller, receiving the webpage screen adjustment event from the remote controller; and
processing the webpage screen adjustment event.
